# EUROPEAN PATENT SPECIFICATION

(11) **EP 4 450 201 B1**
(45) Date of publication and mention of the grant of the patent: **03.06.2026**
(21) Application number: 24168565.0
(22) Date of filing: 04.04.2024
(51) Int. Cl.: B23K 9/095

(54) **TRAVEL SPEED PACING SYSTEM FOR WELDING-TYPE OPERATIONS**
GESCHWINDIGKEITSREGELUNGSSYSTEM FÜR SCHWEISSOPERATIONEN
SYSTÈME DE RÉGULATION DE LA VITESSE DE DÉPLACEMENT POUR DES OPÉRATIONS DE TYPE SOUDAGE

(30) Priority: 14.04.2023 US 202363496250 P; 27.03.2024 US 202418618611
(43) Date of publication of application: 23.10.2024
(73) Proprietor: Illinois Tool Works Inc., Glenview IL 60025 (US)
(72) Inventor: SCHNEIDER, Joseph C., Glenview, 60025 (US); LEITERITZ, Nathan Gerald, Glenview, 60025 (US)
(74) Representative: HGF

(56) References cited:
- CA-A1- 3 145 721
- FR-A1- 3 100 978
- US-B2- 10 839 718

## Description

### FIELD OF THE DISCLOSURE

This disclosure relates generally to welding and, more particularly, to travel speed pacing systems and methods for welding-type operations.

### BACKGROUND

New and/or inexperienced welders commonly struggle with poor weld quality, due to a lack of understanding on proper welding technique. A common issue is that welders burn through thinner materials due to moving the welding tool with too slow of a travel speed. Additionally, welders may have inconsistent travel speeds, which can reduce the overall quality of the weld.

### SUMMARY

Travel speed pacing systems and methods for welding-type operations are disclosed, substantially as illustrated by and described in connection with at least one of the figures, as set forth more completely in the claims.

### BRIEF DESCRIPTION OF THE DRAWINGS

FIG. 1 is a block diagram of an example welding-type system including a remote wire feeder and configured to provide welding-type output power, in accordance with aspects of this disclosure.
FIG. 2 is a block diagram of another example welding system configured to provide welding-type output power with a welding-type power supply having an integrated wire feeder, in accordance with aspects of this disclosure.
FIG. 3 illustrates an example interface that may implement the interfaces and/or devices of FIGS. 1 and/or 2 to input characteristics and length of a welding-type operation.
FIGS. 4 illustrates the example interface of FIG. 3 tracking elapsed time at a first time during a welding-type operation.
FIG. 5 illustrates the example interface of FIG. 3 tracking elapsed time at a second time during a welding-type operation.
FIG. 6 is a flowchart representative of example machine readable instructions which may be executed by the example welding-type power supplies and/or external computing devices of FIGS. 1 and/or 2 to provide travel speed guidance.
FIG. 7 is a block diagram of an example computing system that may be used to implement the external computing device of FIGS. 1 and/or 2.

The figures are not necessarily to scale. Where appropriate, similar or identical reference numbers are used to refer to similar or identical components.

### DETAILED DESCRIPTION

Prior techniques to improve welder technique with regard to travel speed involve tracking travel speed and providing feedback to the operator. Some techniques are disclosed in U.S. Patent No. 11,014,183, U.S. Patent No. 9,522,437, U.S. Patent No. 9,573,215, and U.S. Patent No. 9.511,443. Prior patent document CA 3145721A1 describes an example of a welding interface device. The device includes a user interface device. a processor. and a machine readable storage device. The machine readable storage device comprises machine readable instructions which, when executed by the processor, cause the processor to: determine, via the user interface device, information describing physical characteristics of a workpiece for a weld to be performed; based on the physical characteristics, determining at least one of a thermal characteristic of the workpiece, an electrical characteristic of the workpiece, or a chemical characteristic of the workpiece; determine a boundary condition associated with the workpiece based on the at least one of the
thermal characteristic, the electrical characteristic, or the chemical characteristic; and output a welding process based on the boundary condition. Prior patent document US 10 839 718 B2 describes systems and methods for monitoring welding information, including evaluating welding parameters such as travel speed, work angle, and contact tip to work distance. The document focuses on training environments where welding data is collected and compared to target values to provide feedback and scoring after a welding run. Unlike the present invention, US 10 839 718 B2 does not disclose a travel speed pacing system that continuously provides real-time pacing feedback during production welding operations.

In disclosed example systems and methods to provide travel speed guidance to an operator, a welding-type power supply or other device determines a target travel speed for a welding-type operation based on operation characteristics, and determines a target operation time based on the target travel speed and the operation length. When the welding-type operation is started, an interface (e.g., on the welding-type power supply or other device) provides a time output that indicates the expiry of the target operation time and/or a difference between the actual operation time and the target operation time. By comparing the actual operation time and the target operation time, an operator can receive feedback as to the operator's travel speed on a simulated or live welding-type operation for practice and/or training purposes.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "welding-type power supply" refers to any device capable of, when power is applied thereto, supplying welding, cladding, plasma cutting, induction heating, laser (including laser welding, laser hybrid, and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, a "weld voltage setpoint" refers to a voltage input to the power converter via a user interface, network communication, weld procedure specification, or other selection method.

As used herein, a "circuit" includes any analog and/or digital components, power and/or control elements, such as a microprocessor, digital signal processor (DSP), software, and the like, discrete and/or integrated components, or portions and/or combinations thereof.

As used herein, the term "remote wire feeder" refers to a wire feeder that is not integrated with the power supply in a single housing.

Disclosed example travel speed pacing systems for welding-type operations include: an interface configured to receive a first input describing a characteristic of a welding-type operation, and configured to receive an operation length of the welding-type operation; and control circuitry configured to: determine a target travel speed based on the first input; determine a target operation time based on the target travel speed and the operation length; and provide a time output representative of least one of a duration of the welding-type operation or a remaining amount of the target operation time.

In some example travel speed pacing systems, the control circuitry is configured to output a notification in response to an expiration of the determined target operation time prior to detecting an end of the welding-type operation. In some example travel speed pacing systems, the notification is at least one of a visual output, an audio output, or a haptic output. In some example travel speed pacing systems, the control circuitry is configured to output an indication of a difference between the determined target operation time and the duration of the welding-type operation.

Some example travel speed pacing systems further include communication circuitry configured to receive a start signal, in which the control circuitry configured to detect the start of the welding-type operation in response to the start signal. In some example travel speed pacing systems, the communication circuitry is configured to receive an end signal, the control circuitry configured to detect an end of the welding-type operation in response to the end signal.

In some example travel speed pacing systems, the interface includes a power supply enabling input, in which the control circuitry configured to control a welding-type power supply to enable or disable output of welding-type power by the welding-type power supply during the welding-type operation based on the power supply enabling input. In some example travel speed pacing systems, the control circuitry is configured to control an output device to output indicators of time intervals expiring during the welding-type operation.

In some example travel speed pacing systems, the interface is configured to receive as the first input at least one of a material thickness of a workpiece of the welding-type operation, a wire diameter, a wire feed speed, a welding-type output current, or a welding-type output voltage. In some example travel speed pacing systems, the welding-type operation is a live arc welding-type operation or a simulated welding-type operation. In some example travel speed pacing systems, the control circuitry is configured to output the at least one of the duration of the welding-type operation or the remaining amount of the target operation time during the welding-type operation. In some example travel speed pacing systems, the control circuitry is configured to output the at least one of the duration of the welding-type operation or the remaining amount of the target operation time at an end of the welding-type operation.

Disclosed example welding-type power supplies include: power conversion circuitry configured to convert input power to welding-type power; an interface configured to receive a first input describing a characteristic of a welding-type operation, and configured to receive an operation length of the welding-type operation; and control circuitry configured to: determine a target travel speed based on the first input; determine a total operation time based on the target travel speed and the operation length; and provide a time output representative of at least one of a duration of the welding-type operation or a remaining amount of the total operation time.

In some example welding-type power supplies, the control circuitry is configured to output a notification in response to an expiration of the determined total operation time prior to detecting an end of the welding-type operation. In some example welding-type power supplies, the notification is at least one of a visual output or an audio output. Some example welding-type power supplies further include communication circuitry configured to communicate with an output device, in which the control circuitry configured to output the notification via the communication circuitry and the output device, and the notification is at least one of a visual output, an audio output, or a haptic output.

In some example welding-type power supplies, the control circuitry is configured to, in response to detecting an end of the welding-type operation, output an indication of a difference between the determined total operation time and the duration of the welding-type operation. In some example welding-type power supplies, the control circuitry is configured to detect the start of the welding-type operation in response to a start signal. In some example welding-type power supplies, the control circuitry configured to detect an end of the welding-type operation in response to an end signal.

In some example welding-type power supplies, the interface includes a power supply enabling input, in which the control circuitry configured to control the power conversion circuitry to enable or disable output of the welding-type power based on the power supply enabling input. In some example welding-type power supplies, the control circuitry is configured to control an output device to output indicators of time intervals expiring during the welding-type operation.

In some example welding-type power supplies, the interface is configured to receive as the first input at least one of a material thickness of a workpiece of the welding-type operation, a wire diameter, a wire feed speed, or a welding-type output voltage. In some example welding-type power supplies, the control circuitry is configured to output the at least one of the duration of the welding-type operation or the remaining amount of the target operation time during the welding-type operation. In some example welding-type power supplies, the control circuitry is configured to output the at least one of the duration of the welding-type operation or the remaining amount of the target operation time at an end of the welding-type operation.

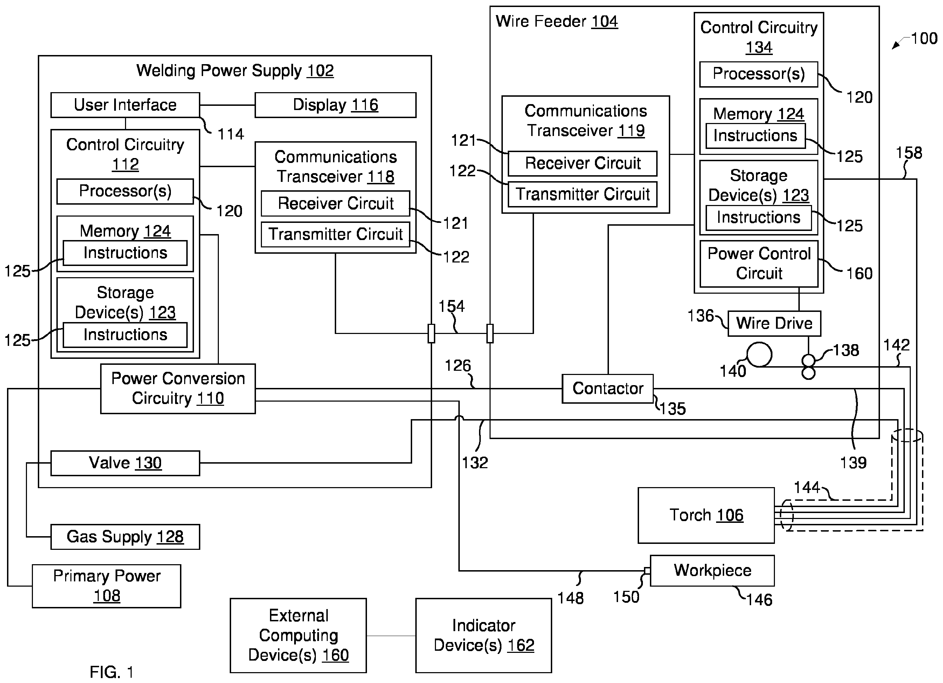

Turning now to the drawings, FIG. 1 is a block diagram of an example welding system 100 having a welding power supply 102, a wire feeder 104, and a welding torch 106. The welding system 100 powers, controls, and supplies consumables to a welding application. The example welding torch 106 is configured for gas metal arc welding (GMAW). In the illustrated example, the power supply 102 is configured to supply power to the wire feeder 104, and the wire feeder 104 may be configured to route the input power to the welding torch 106. In addition to supplying an input power, the wire feeder 104 supplies a filler metal to a welding torch 106 for various welding applications (e.g., GMAW welding, flux core arc welding (FCAW)).

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes a power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output, and a separate auxiliary converter is provided to convert primary power to auxiliary power. In some other examples, the power supply 102 receives a converted auxiliary power output directly from a wall outlet. Any suitable power conversion system or mechanism may be employed by the power supply 102 to generate and supply both weld and auxiliary power.

The power supply 102 includes control circuitry 112 to control the operation of the power supply 102. The power supply 102 also includes a user interface 114. The control circuitry 112 receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with the wire feeder 104 and/or other welding devices within the welding system 100. Further, in some situations, the power supply 102 communicates with the wire feeder 104 and/or other welding devices using a wired connection, such as by using a network interface controller (NIC) to communicate data via a network (e.g., ETHERNET, 10BASE2, 10BASE-T, 100BASE-TX, etc.). The wire feeder 104 may include the user interface 114 and/or the display for presenting, showing, or indicating, information to an operator as disclosed herein.

The control circuitry 112 includes at least one processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device and/or logic circuit. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage).

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. The example wire feeder 104 also includes a communications transceiver 119, which may be similar or identical in construction and/or function as the communications transceiver 118. The communications transceiver 118 may be configured for any other type of wireless and/or wired communications.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a gas conduit 132 (which in some implementations may be packaged with the welding power output) to the wire feeder 104 which provides the shielding gas to the welding application. In some examples, the welding system 100 does not include the gas supply 128, the valve 130, and/or the gas conduit 132. In some other examples, the valve 130 is located in the wire feeder 104, and, the gas supply 128 is connected to the wire feeder 104.

In some examples, the wire feeder 104 uses the welding power to power the various components in the wire feeder 104, such as to power wire feeder control circuitry 134. As noted above, the weld cable 126 may be configured to provide or supply the welding power. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to a weld conductor 139 from the weld cable 126 for the welding application. In some examples, the contactor 135 is an electromechanical device. However, the contactor 135 may be any other suitable device, such as a solid state device, and/or may be omitted entirely and the weld cable 126 is directly connected to the output to the welding torch 106. The wire feeder 104 includes a wire drive 136 that receives control signals from the wire feeder control circuitry 134 to drive rollers 138 that rotate to pull wire off a spool 140 of wire. The wire drive 136 feeds electrode wire to the welding torch 106. The wire is provided to the welding application through a wire liner 142. Likewise, the wire feeder 104 may provide the shielding gas from the gas conduit 132. The example gas conduit 132, the example wire liner 142, and the example conductor 139 are combined in a torch cable 144. The electrode wire, the shield gas, and the power from the weld cable are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

A communication cable 154 connected between the power supply 102 and the wire feeder 104, which enables bidirectional communication between the transceivers 118, 119. The communications transceivers 118 and 119 may communicate via the communication cable 154, via the weld circuit, via wireless communications, and/or any other communication medium. Examples of such communications include weld cable voltage measured at a device that is remote from the power supply 102 (e.g., the wire feeder 104).

The example system 100 may further include one or more external computing devices 160 and/or one or more indicator device(s) 162. The example external computing devices 160 may be a welding pendant, smartphone, tablet computer, desktop or laptop computer, PDA, media device, game console, and/or any other type of computing device separate from the welding-type power supply 102 and wire feeder 104. As discussed in more detail below, the external computing device(s) 160 and/or the interface 114 are configured to provide travel speed guidance to an operator of the system 100. In particular, the example external computing device(s) 160 and/or the interface 114 determines an appropriate travel speed based on characteristics of the welding-type operation, determines a target operation time based on the determined travel speed and the operation length (e.g., in inches or centimeters), and outputs a timer or counter value during the duration of the target operation time and/or during the duration of the welding-type operation. In some examples, the example external computing device(s) 160 and/or the interface 114 output indicator(s) at the expiration of the target operation time to allow the operator to compare the welded length during the target operation time to the expected welded length.

In some examples, the external computing device(s) 160 and/or the power supply 102 communicates with the indicator device(s) 162 to output the indicators. Example indicator devices 162 may include: speakers, headsets, bone conduction devices, and/or other audio output systems; display screens, lights, LEDs, and/or other visual devices; force feedback devices, vibration feedback devices, motive feedback devices, and/or other types of haptic feedback devices; via manipulation of a welding-type arc without affecting the quality of the operation (e.g., outputting sound and/or visual indications by modulating an arc), and/or any other types of feedback devices. The indicator device(s) 162 may be integrated into other equipment, such as portable electronic devices (e.g., smartphones), welding-type power supplies, welding tables, wire feeders, welding helmets, wristwatches, apparel, and/or any other type of wearable or other devices that are observable by the operator.

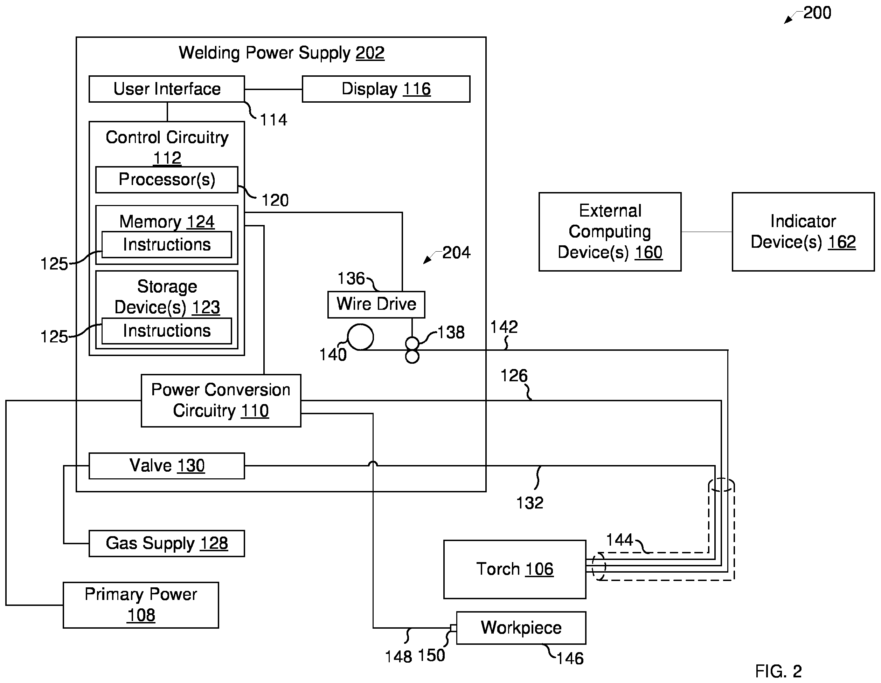

FIG. 2 is a block diagram of another example welding-type system 200 configured to provide power control with a welding power supply 202 having an integrated wire feeder 204. The example welding power supply 202 includes the power conversion circuitry 110, control circuitry 112, the user interface 114, the display 116, the processor(s) 120, the storage devices(s) 123, the memory 124, the instructions 125, and the valve 130 of the example power supply 102 of FIG. 1. The example welding-type system 200 further includes one or more external computing devices 160 and/or one or more indicator device(s) 162.

In contrast with the example system 100, in the example of FIG. 2 the power supply 202 includes the integrated wire feeder 204 instead being connected to a remote wire feeder. The power supply 202 of FIG. 2 outputs welding-type power and electrode wire to the torch 106.

The integrated wire feeder 204 includes the wire drive 136, the drive rollers 138, and the wire spool 140, and feeds the wire through a torch cable 144 to the torch 106.

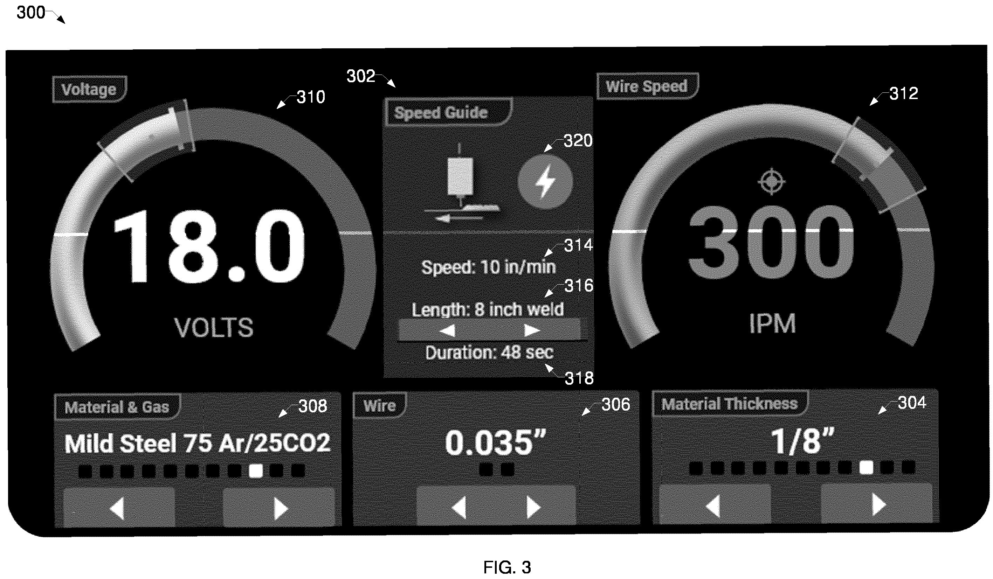

FIG. 3 illustrates an example interface 300 that may implement the interfaces 114 and/or external computing devices 160 of FIGS. 1 and/or 2 to input characteristics and length of a welding-type operation. The interface 300 may be implemented on a graphical user interface (GUI) of the welding-type power supplies 102, 202, on an interface of the wire feeder 104, and/or on the external computing device 160, such as a smartphone display. The example interface 300 of FIG. 3 is a welding power supply interface which is displayed by the interface 114 and controlled by the control circuitry 112 of the welding power supplies 102, 202 of FIGS. 1 and/or 2, and allows selection of welding parameters such as voltage and wire feed speed. However, the interface 300 may implement any other type of welding-type equipment interface, such as power supplies for GMAW, FCAW, SMAW, GTAW, plasma cutting, and/or any other type of welding-type equipment.

To provide travel speed guidance, the example interface 300 includes a speed guidance interface 302 and weld characteristic inputs 304, 306, 308. A material thickness input 304 allows input of the thickness of the workpiece 146. A wire size input 306 allows input of the size (e.g., diameter) of a welding wire to be used in the welding-type operation. A material and gas input 308 allows input of the workpiece material and welding gas composition. In some examples, the type welding equipment may limit the selectable values of the inputs 304-308 based on the capabilities of the selected equipment, and/or may reduce or increase the number of inputs. The values for the inputs 304-308 may be in actual units or normalized to a range. In some examples, recommended or default values of some inputs (e.g., voltage and wire feed speed inputs 310, 312) may be determined or provided based on other inputs (e.g., the material thickness input 304 and the wire size input 306).

The example inputs 304-312 may be received via an input device of the interface 300, such as a touchscreen, button, knob, and/or any other software and/or hardware input device. Additionally or alternatively, any or all of the inputs 304-312 may be received via communication with another (e.g., external) device. For example, for an interface implemented on the external computing device 160, the inputs 304-312 may be received via the external computing device 160 and/or via communications with a helmet, a power supply, a wire feeder, a pendant, and/or any other welding-type equipment or device. The external computing device 160 implementing the interface 300 may also receive any of the inputs 304-312 via obtaining and analyzing an optical image via an optical sensor (e.g., a camera of a smartphone). For example, a camera may be used to scan a code or marker to identify aspects of the workpiece, wire, welding parameters, and/or any other input characteristics or parameters.

The speed guidance interface 302 may be displayed or hidden, such as by selection of a speed guide interface selection button. While displayed, the speed guidance interface 302 displays a target travel speed 314, an operation length input 316, and a target operation time 318. The external computing device 160 or the processor 120, 702 determines the target travel speed 314 based on the characteristics of the weld (e.g., inputs 304-308) and/or operational parameters (e.g., voltage 310 and wire feed speed 312 for a GMAW or FCAW operation). For example, as the voltage 310 and/or wire feed speed 312 increase for a given material thickness, the target travel speed 314 may also be determined to increase to avoid burn through of the material during a welding operation. The control circuitry 112 and/or the external computing device 160 may use a look-up table of travel speed values, and/or calculated using an equation, based on the input parameters (e.g., determined by empirical weld testing). In some examples, the operator may manually change the target travel speed via the interface 300.

The operator specifies the operation length (e.g., weld length, cut length, etc.) via the operation length input 316. The external computing device 160 or the processor 120, 702 further determines the target operation time 318 based on the target travel speed 314 and the operation length input 316.

The speed guidance interface 302 further includes an power supply enabling input 320, which controls whether a welding-type tool used to perform the operation specified by the inputs 304-318 uses output power from the power supply 102, 202. For example, the control circuitry 112 of the power supply 102 (or the processor 702 of the external computing device 160) may further control the power conversion circuitry 110 to enable or disable output of welding-type power by the welding-type power supply 102 based on the power supply enabling input 320. If the power supply enabling input 320 is selected to turn off or disable the output power, the control circuitry 112 controls the power conversion circuitry 110 to not output the welding-type power to the welding torch 106, so that the operator can perform a simulation or practice operation without an arc or other output. Conversely, the power supply enabling input 320 may be selected to turn on or enable the output power to cause the control circuitry 112 to control the power conversion circuitry 110 to output welding-type power. The operator may enable the power supply enabling input 320 to, for example, provide the speed guidance for a live arc training operation and/or to monitor a travel speed during a production operation.

The power supply enabling input 320 may be selected via the interface 300 via the user interface 114 or the external computing device 160, or may be selected via the welding torch 106 (or other welding-type tool). For example, a double tap of a trigger or other specific input of the welding torch 106 may enable and disable the output power.

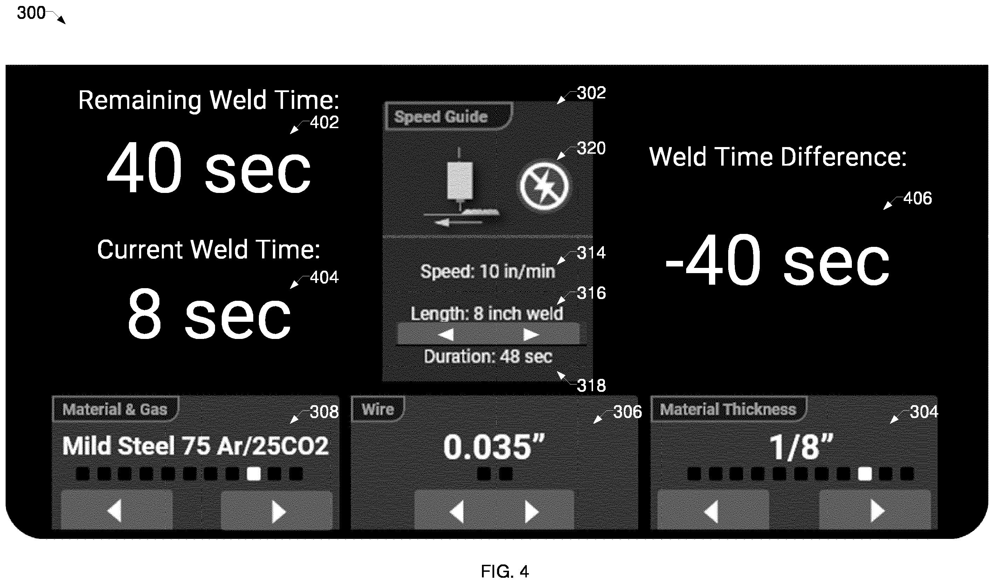

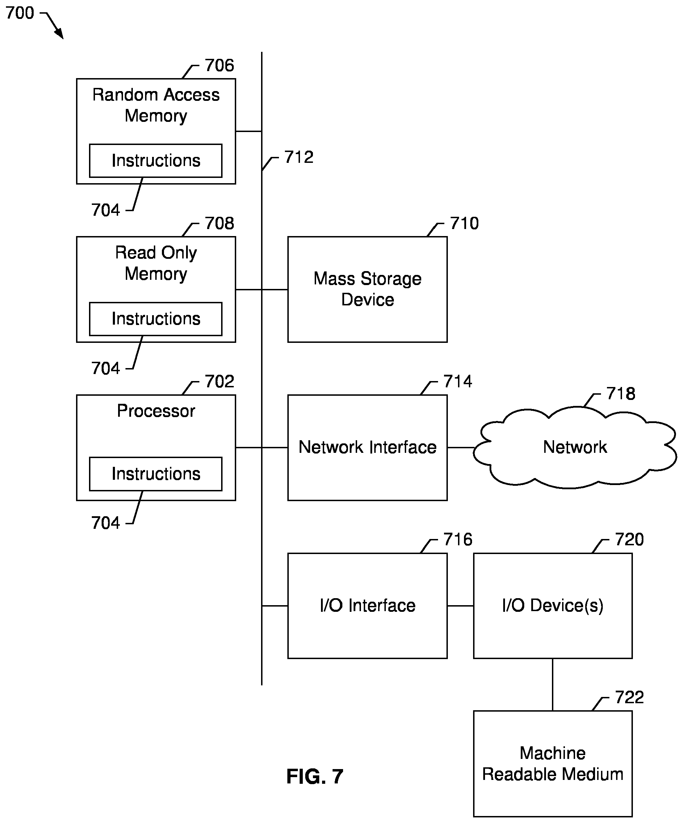

When the operator initiates the operation (e.g., by pulling a trigger or other input, which may be received via communications circuitry such as the communications transceiver 118, the network interface 714 of FIG. 7, and/or the I/O interface 716 of FIG. 7), the external computing device 160 and/or the control circuitry 112 starts a timer to track the target operation duration and/or to track the actual operation time. FIGS. 4 illustrates the example interface 300 of FIG. 3 tracking elapsed time at a first time during a welding-type operation. The example interface 300 may change to an speed guidance operation mode as depicted in FIG. 4 while the operation is underway (e.g., while the trigger is pulled).

As illustrated in FIG. 4, the interface 300 displays a remaining operation time indicator 402 (e.g., remaining weld time) and a total operation time indicator 404 (e.g., current weld time). The remaining weld time indicator 402 displays a remaining portion of the determined target operation time (e.g., counting down from the target operation time), and the total operation time indicator 404 displays a total time of the current operation (e.g., counting up during the operation). The counting of the remaining operation time may provide audible and/or haptic notifications, such as a voice output counting down the value of the remaining weld time indicator 402, or haptic feedback providing haptic indications of time periods. The increments of countdown could be more frequent (e.g., every second) or less frequent (e.g., every 2 seconds, every 3 seconds, every 5 seconds, etc.). Additionally or alternatively, a sound effect or audio track may be compressed or clipped to the desired duration and played (e.g., to finish the audio track at the same time as the expiration of the target operation time).

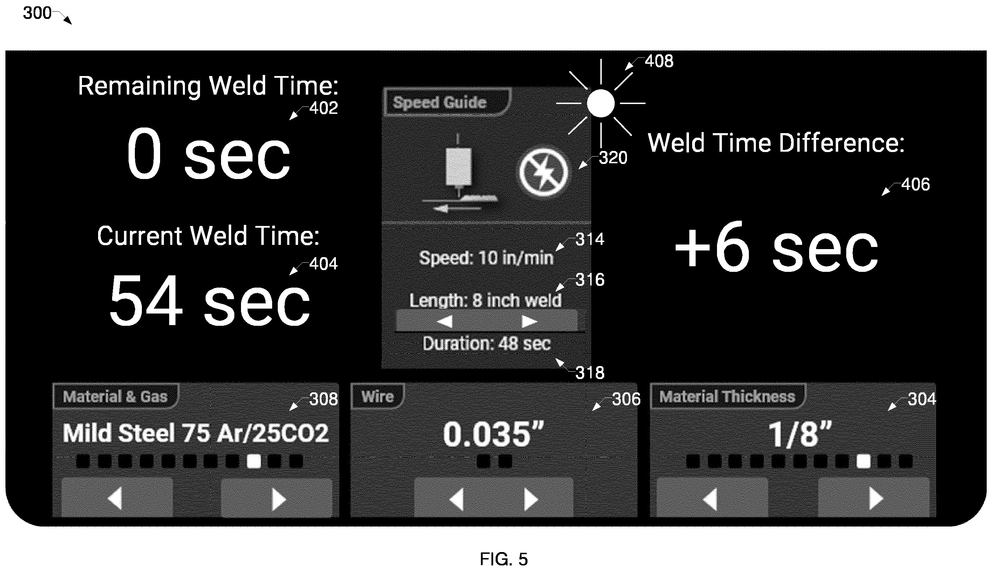

If the remaining operation time indicator 402 reaches an end value (e.g., zero) before the end of the current operation (e.g., before the trigger is released), the control circuitry 112 or the external computing device 160 outputs a notification or indicator to alert the operator that the target operation time has been reached. The control circuitry 112 or the external computing device 160 may output the notification or alert via the indicator device(s) 162 and/or via the interface 114. FIG. 5 illustrates the example interface 300 of FIG. 3 tracking elapsed time at a second time following an end of a welding-type operation. As shown in FIG. 5, a visual indicator 408 outputs an indication that the remaining weld time 402 has reached an end value (e.g., zero), indicating that the target operation time has been exceeded.

An operator may choose to stop the operation in response to the indicator 408, such as to determine the length of the operation that has not been completed in the target operation time 318. Alternatively, the operator may choose to continue the operation to completion. After the remaining weld time 402 reaches the end value, the remaining weld time indicator 402 may remain at the end value, and the total operation time indicator 404 continues to count the duration of the operation.

In some examples, when remaining operation time indicator 402 reaches the end value during a live-arc welding-type operation, the control circuitry 112 may control the power conversion circuitry 110 to stop outputting the welding-type power, which extinguishes the arc.

At the end of the operation (e.g., upon release of the trigger, or other end signal which may be received via communications circuitry such as the communications transceiver 118, the network interface 714 of FIG. 7, and/or the I/O interface 716 of FIG. 7), the interface 300 displays the value of the total operation time indicator 404 (e.g., the actual weld duration). The example interface 300 may further display other metrics, such as a measured average weld speed for visual comparison with the target travel speed 314, and/or an indicators of whether the measured average weld speed was too slow or too fast compared to the target travel speed 314.

The example interface 300 of FIG. 5 further displays a difference indicator 406, which measures a difference between the measured total operation time 404 and the target operation time 318. A positive weld time difference indicates that the actual weld duration was longer than the target operation time and, therefore, the average travel speed was slower than the target travel speed 314. Conversely, a negative weld time difference indicates that the actual weld duration was shorter than the target operation time and, therefore, the average travel speed was faster than the target travel speed 314.

In some examples, the difference indicator 406 may be implemented or augmented with interpretive information, such as informing the operator whether the resulting travel speed was too fast or too slow compared to the target travel speed. Additionally or alternatively, the difference indicator 406 may be color-coded or otherwise include information representative of how close the actual weld duration (and/or actual travel speed) was to the target operation time (and/or target travel speed). For example, an actual weld duration within a first range (e.g., +/- 1 second, +/- 2%) may be shown in green, an actual weld duration outside of the first range but within a second range (e.g., +/- 3 seconds, +/- 5%) may be shown in yellow, and/or an actual weld duration outside of the second range (e.g., more than 3 seconds, more than 5%) may be shown in red. The colors, upper range limits, and/or lower range limits may be modified, and/or may be represented in other visual or audible ways. Additionally or alternatively, the interface 300 may determine and output recommendations to adapt the welding-type parameters to the actual welding speed.

In some examples, the interface 300 includes indicator selections, such as an audio indicator selection, a visual indicator selection, and/or a vibration (or haptic) indicator selection, which enable or disable audio and/or vibration types of indicators to be output, respectively.

In some other examples, instead of displaying the indicators 402-406 during the welding-type operation, the interface 300 may instead display any of the remaining operation time indicator 402, the total operation time indicator 404, and/or the difference indicator 406 at an end of the welding-type operation (e.g., when the operator releases the trigger or otherwise ends the welding-type operation).

In some examples, the speed guidance interface 302 may be partially or completely implemented on the external computing device 160, such as a smartphone or other operator device. In such examples, the operator may input the characteristics of the welding-type operation on the interface of the welding-type power supply 102, 202, which determines a target travel speed based on the inputs. The operator then transfers or inputs the determined target travel speed 314 and the operation length input 316 to the external computing device 160, which determines (e.g., via processor 702) the target operation time 318, monitors the timers and/or indicators 402-406, and/or controls the output of indicator 408 (e.g., via the indicator device(s) 162).

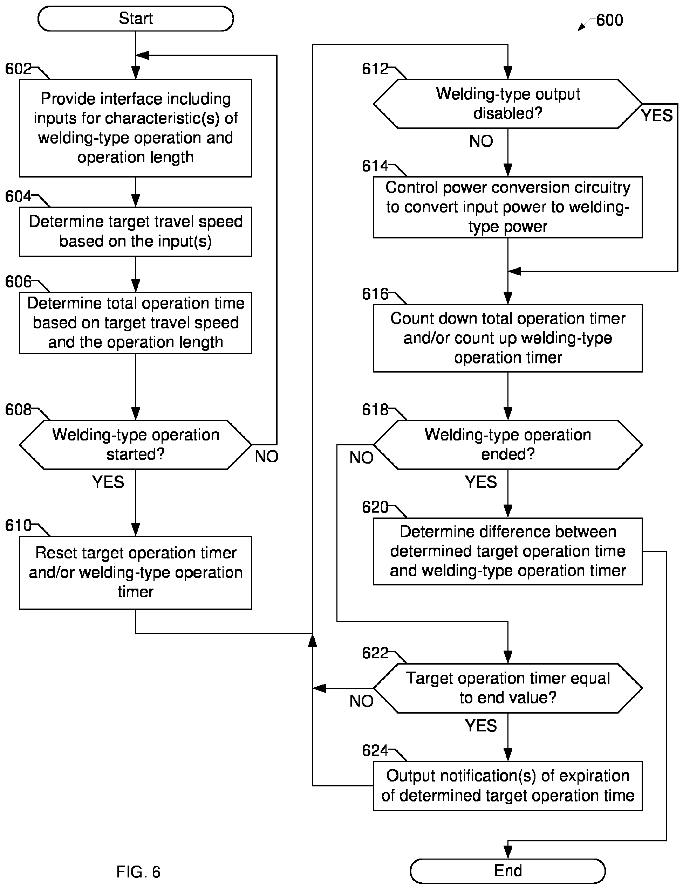

FIG. 6 is a flowchart representative of example machine readable instructions 600 which may be executed by the example welding-type power supplies 102, 202 and/or external computing devices 160 of FIGS. 1 and/or 2 to provide travel speed guidance. The example instructions 600 are discussed below with reference to the interface 300 and the external computing device 160 of FIG. 1, but may be performed by other devices.

At block 602, the control circuitry 112 provides an interface (e.g., the interface 300 of FIG. 3 via user interface 114 of FIG. 1), including inputs for characteristic(s) of a welding-type operation and an operation length. For example, the interface 300 includes inputs 304-312 for material thickness, wire size, workpiece material, welding gas type, voltage, and wire feed speed, although other characteristics may be used. The interface 300 further includes an operation length input 316.

At block 604, the control circuitry 112 determines a target travel speed (e.g., target travel speed 314) based on the input(s). For example, the control circuitry 112 may use a look-up table or algorithm to determine the target travel speed.

At block 606, the control circuitry 112 determines a total operation time (e.g., the total operation time 318) based on the target travel speed 314 and the operation length input 316.

At block 608, the control circuitry 112 determines whether the welding-type operation has started. For example, the control circuitry 112 may determine whether a trigger or other "on" signal has been received (e.g., from the welding torch 106, from another input device). If the welding-type operation has not started (block 608), control returns to block 602.

When the welding-type operation has started (block 608), at block 610 the control circuitry 112 resets a target operation timer and/or a welding-type operation timer. For example, the remaining operation time indicator 402 may be reset to the target operation timer, and/or the total operation time indicator 404 may be reset to an initial value such as zero.

At block 612, the control circuitry 112 determines whether the welding-type output is disabled (e.g., via the power supply enabling input 320). If the welding-type output is enabled (block 612), at block 614 the control circuitry 112 controls the power conversion circuitry 110 to convert input power to welding-type output power. The power conversion circuitry 110 further outputs the welding-type output power to the welding-type tool (e.g., the welding torch 106).

After controlling the power conversion circuitry 110 to output welding-type power (block 614), or if the welding-type output is disabled (block 612), at block 616 the control circuitry 112 counts down the target operation timer (e.g., the remaining operation time indicator 402) and/or counts up the welding-type operation timer (e.g., the total operation time indicator 404).

At block 618, the control circuitry 112 determines whether the welding-type operation has ended. For example, the control circuitry 112 may determine whether a trigger or other "on" signal is still being received (e.g., from the welding torch 106, from another input device). If the welding-type operation is ended (block 618), at block 620 the control circuitry 112 determines a difference (e.g., the difference indicator 406) between the determined target operation time and the welding-type operation timer. The example instructions 600 then end.

If the welding-type operation is still ongoing (block 618), at block 622 the control circuitry 112 determines whether the target operation timer (e.g., remaining operation time indicator 402) is equal to an end value (e.g., zero). If the target operation timer is equal to the end value (block 622), at block 624 the control circuitry 112 outputs notification(s) of the expiration of the determined target operation time 318. For example, the control circuitry 112 may control the indicator device(s) 160 to output an audible, visual, haptic, and/or any other notification (e.g., the visual indicator 408) to the operator.

After outputting the notification(s) (block 624), or if the target operation timer is not equal to the end value (block 622), control returns to block 612 to continue the welding-type operation.

FIG. 7 is a block diagram of an example computing system 700 that may be used to implement the external computing device(s) 160 and/or the interface 300 of FIGS. 1-5. The example computing system 700 of FIG. 7 may be a welding device, a general-purpose computer, a laptop computer, a tablet computer, a mobile device, a server, and/or any other type of computing device.

The example computing system 700 of FIG. 7 includes a processor 702. The example processor 702 may be any general purpose central processing unit (CPU) from any manufacturer. In some other examples, the processor 702 may include one or more specialized processing units, such as RISC processors with an ARM core, graphic processing units, digital signal processors, and/or system-on-chips (SoC). The processor 702 executes machine readable instructions 704 that may be stored locally at the processor (e.g., in an included cache or SoC), in a random access memory 706 (or other volatile memory), in a read only memory 708 (or other non-volatile memory such as FLASH memory), and/or in a mass storage device 710. The example mass storage device 710 may be a hard drive, a solid state storage drive, a hybrid drive, a RAID array, and/or any other mass data storage device. In some examples, the instructions 600 of FIG. 6 may be implemented using the machine readable instructions 704 stored in one or more of the random access memory 706, the read only memory 708, the mass storage device 710, and/or other storage device, and executed via the processor 702.

A bus 712 enables communications between the processor 702, the RAM 706, the ROM 708, the mass storage device 710, a network interface 714, and/or an input/output interface 716.

The example network interface 714 includes hardware, firmware, and/or software to connect the computing system 700 to a communications network 718 such as the Internet. For example, the network interface 714 may include IEEE 802.X-compliant wireless and/or wired communications hardware for transmitting and/or receiving communications.

The example I/O interface 716 of FIG. 7 includes hardware, firmware, and/or software to connect one or more input/output devices 720 to the processor 702 for providing input to the processor 702 and/or providing output from the processor 702. For example, the I/O interface 716 may include a graphics processing unit for interfacing with a display device, a universal serial bus port for interfacing with one or more USB-compliant devices, a FireWire, a field bus, and/or any other type of interface. Example I/O device(s) 720 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The example processor 702 may access a non-transitory machine readable medium 722 via the I/O interface 716 and/or the I/O device(s) 720. Examples of the machine readable medium 722 of FIG. 7 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine readable media.

The example network interface 714 and/or the I/O interface 716 may communicate with the welding-type power supplies 102, 202 and/or with the indicator device(s) 162 of FIGS. 1 and/or 2 to communicate parameters and/or commands, and/or to output indicators based on indicator intervals and/or intermediate intervals.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the appended claims.

## Claims

1. A travel speed pacing system for welding-type operations, the system comprising:
an interface (114, 160; 300) configured to receive a first input (304, 306, 308, 310, 312) describing a characteristic of a welding-type operation, and configured to receive an operation length (316) of the welding-type operation;
communication circuitry (118; 714, 716) configured to receive a start signal indicative of a start of a welding-type operation; and
control circuitry (112, 160) configured to:
determine a target travel speed (314) based on the first input;
determine a target operation time (318) based on the target travel speed and the operation length;
detect the start of the welding-type operation in response to the start signal and start a timer; and
provide a time output representative of least one of a duration of the welding-type operation (404) or a remaining amount of the target operation time (402).

2. The travel speed pacing system as defined in claim 1, wherein the control circuitry (112, 160) is configured to output a notification in response to an expiration of the determined target operation time (318) prior to detecting an end of the welding-type operation, and optionally wherein the notification is at least one of a visual output, an audio output, or a haptic output.

3. The travel speed pacing system as defined in claim 1, wherein the control circuitry (112, 160) is configured to output an indication of a difference between the determined target operation time (318) and the duration of the welding-type operation (404).

4. The travel speed pacing system as defined in claim 1, wherein the communication circuitry (118; 714, 716) is configured to receive an end signal, the control circuitry (112, 160) configured to detect an end of the welding-type operation in response to the end signal.

5. The travel speed pacing system as defined in claim 1, wherein the interface (114, 160; 300) comprises a power supply enabling input (320), the control circuitry (112, 160) configured to control a welding-type power supply to enable or disable output of welding-type power by the welding-type power supply during the welding-type operation based on the power supply enabling input, or wherein the control circuitry is configured to control an output device (162) to output indicators of time intervals expiring during the welding-type operation.

6. The travel speed pacing system as defined in claim 1, wherein the interface (114, 160; 300) is configured to receive as the first input (304, 306, 308, 310, 312) at least one of a material thickness of a workpiece of the welding-type operation, a wire diameter, a wire feed speed, a welding-type output current, or a welding-type output voltage, or wherein the welding-type operation is a live arc welding-type operation or a simulated welding-type operation.

7. The travel speed pacing system as defined in claim 1, wherein the control circuitry (112, 160) is configured to output the at least one of the duration of the welding-type operation (404) or the remaining amount of the target operation time (402) during the welding-type operation, or wherein the control circuitry is configured to output the at least one of the duration of the welding-type operation (404) or the remaining amount of the target operation time (402) at an end of the welding-type operation.

8. A welding-type power supply (100), comprising:
power conversion circuitry (110) configured to convert input power to welding-type power; and
a travel speed pacing system according to claim 1.

9. The welding-type power supply (100) as defined in claim 8, wherein the control circuitry (112, 160) is configured to output a notification in response to an expiration of the determined target operation time (318) prior to detecting an end of the welding-type operation.

10. The welding-type power supply (100) as defined in claim 9, wherein the notification is at least one of a visual output or an audio output, or wherein the communication circuitry (118) is configured to communicate with an output device (162), the control circuitry configured to output the notification via the communication circuitry and the output device, wherein the notification is at least one of a visual output, an audio output, or a haptic output.

11. The welding-type power supply (100) as defined in claim 8, wherein the control circuitry (112) is configured to, in response to detecting an end of the welding-type operation, output an indication of a difference between the determined target operation time (318) and the duration of the welding-type operation (404).

12. The welding-type power supply (100) as defined in claim 8, wherein the control circuitry (112) configured to detect an end of the welding-type operation in response to an end signal.

13. The welding-type power supply (100) as defined in claim 8, wherein the interface (114; 300) comprises a power supply enabling input (320), the control circuitry (112) configured to control the power conversion circuitry (110) to enable or disable output of the welding-type power based on the power supply enabling input, or wherein the control circuitry is configured to control an output device (162) to output indicators of time intervals expiring during the welding-type operation.

14. The welding-type power supply as defined in claim 8, wherein the interface is configured to receive as the first input at least one of a material thickness of a workpiece of the welding-type operation, a wire diameter, a wire feed speed, or a welding-type output voltage.

15. The welding-type power supply as defined in claim 8, wherein the control circuitry is configured to output the at least one of the duration of the welding-type operation (404) or the remaining amount of the target operation time (402) during the welding-type operation, or wherein the control circuitry is configured to output the at least one of the duration of the welding-type operation (404) or the remaining amount of the target operation time (402) at an end of the welding-type operation.

## Patentansprüche

1. System zur Taktung einer Verfahrgeschwindigkeit für einen schweißtechnischen Vorgang, das System aufweisend:
eine Schnittstelle (114, 160; 300), die dazu eingerichtet ist, eine erste Eingabe (304, 306, 308, 310, 312) zu empfangen, die eine Eigenschaft eines schweißtechnischen Vorgangs beschreibt, und dazu eingerichtet ist, eine Schweißlänge (316) des schweißtechnischen Vorgangs zu empfangen;
Kommunikationsschaltung (118; 714, 716), die dazu eingerichtet ist, ein Startsignal zu empfangen, das einen Start eines schweißtechnischen Vorgangs angibt; und
Steuerschaltung (112, 160), eingerichtet zum:
Bestimmen einer Soll-Verfahrgeschwindigkeit (314) basierend auf der ersten Eingabe;
Bestimmen einer Soll-Schweißzeit (318) basierend auf der Soll-Verfahrgeschwindigkeit und der Schweißlänge;
Erfassen des Beginns des schweißtechnischen Vorgangs in Reaktion auf das Startsignal und Starten eines Zeitgebers; und
Bereitstellen einer Zeitausgabe, die für mindestens eines von einer Dauer des schweißtechnischen Vorgangs (404) oder einer verbleibenden Zeitdauer der Soll-Schweißzeit (402) repräsentativ ist.

2. System zur Taktung einer Verfahrgeschwindigkeit nach Anspruch 1, wobei die Steuerschaltung (112, 160) dazu eingerichtet ist, in Reaktion auf einen Ablauf der bestimmten Soll-Schweißzeit (318) vor dem Erfassen eines Endes des schweißtechnischen Vorgangs eine Benachrichtigung auszugeben, und wobei die Benachrichtigung mindestens eine von einer visuellen Ausgabe, einer akustischen Ausgabe oder einer haptischen Ausgabe ist.

3. System zur Taktung einer Verfahrgeschwindigkeit nach Anspruch 1, wobei die Steuerschaltung (112, 160) dazu eingerichtet ist, eine Anzeige einer Differenz zwischen der bestimmten Soll-Schweißzeit (318) und der Dauer des schweißtechnischen Vorgangs (404) auszugeben.

4. System zur Taktung einer Verfahrgeschwindigkeit nach Anspruch 1, wobei die Kommunikationsschaltung (118; 714, 716) dazu eingerichtet ist, ein Endsignal zu empfangen, wobei die Steuerschaltung (112, 160) dazu eingerichtet ist, ein Ende des schweißtechnischen Vorgangs in Reaktion auf das Endsignal zu erfassen.

5. System zur Taktung einer Verfahrgeschwindigkeit nach Anspruch 1, wobei die Schnittstelle (114, 160; 300) einen Stromversorgungs-Freigabeeingang (320) aufweist, wobei die Steuerschaltung (112, 160) dazu eingerichtet ist, eine schweißtechnische Stromversorgung zu steuern, um eine Abgabe von schweißtechnischer Leistung durch die schweißtechnische Stromversorgung während des schweißtechnischen Vorgangs basierend auf dem Stromversorgungs-Freigabeeingang freizugeben oder zu deaktivieren, oder wobei die Steuerschaltung dazu eingerichtet ist, eine Ausgabevorrichtung (162) zu steuern, um Indikatoren von während des schweißtechnischen Vorgangs ablaufenden Zeitintervallen auszugeben.

6. System zur Taktung einer Verfahrgeschwindigkeit nach Anspruch 1, wobei die Schnittstelle (114, 160; 300) dazu eingerichtet ist, als die erste Eingabe (304, 306, 308, 310, 312) mindestens eines von einer Materialdicke eines Werkstücks des schweißtechnischen Vorgangs, einem Drahtdurchmesser, einer Drahtvorschubgeschwindigkeit, einem schweißtechnischen Ausgangsstrom oder einer schweißtechnischen Ausgangsspannung zu empfangen, oder wobei der schweißtechnische Vorgang ein realer Lichtbogenschweißvorgang oder ein simulierter schweißtechnischer Vorgang ist.

7. System zur Taktung einer Verfahrgeschwindigkeit nach Anspruch 1, wobei die Steuerschaltung (112, 160) dazu eingerichtet ist, mindestens eines von der Dauer des schweißtechnischen Vorgangs (404) oder der verbleibenden Zeitdauer der Soll-Schweißzeit (402) während des schweißtechnischen Vorgangs auszugeben, oder wobei die Steuerschaltung dazu eingerichtet ist, mindestens eines von der Dauer des schweißtechnischen Vorgangs (404) oder der verbleibenden Zeitdauer der Soll-Schweißzeit (402) an einem Ende des schweißtechnischen Vorgangs auszugeben.

8. Schweißtechnische Stromversorgung (100), aufweisend:
eine Leistungsumwandlungsschaltung (110), die dazu eingerichtet ist, Eingangsleistung in schweißtechnische Leistung umzuwandeln; und
ein System zur Taktung einer Verfahrgeschwindigkeit nach Anspruch 1.

9. Schweißtechnische Stromversorgung (100) nach Anspruch 8, wobei die Steuerschaltung (112, 160) dazu eingerichtet ist, in Reaktion auf einen Ablauf der bestimmten Soll-Schweißzeit (318) vor dem Erfassen eines Endes des schweißtechnischen Vorgangs eine Benachrichtigung auszugeben.

10. Schweißtechnische Stromversorgung (100) nach Anspruch 9, wobei die Benachrichtigung mindestens eine ist von einer visuellen Ausgabe oder einer akustischen Ausgabe, oder wobei die Kommunikationsschaltung (118) dazu eingerichtet ist, mit einer Ausgabevorrichtung (162) zu kommunizieren, wobei die Steuerschaltung dazu eingerichtet ist, die Benachrichtigung über die Kommunikationsschaltung und die Ausgabevorrichtung auszugeben, wobei die Benachrichtigung mindestens eine ist von einer visuellen Ausgabe, einer akustischen Ausgabe oder einer haptischen Ausgabe.

11. Schweißtechnische Stromversorgung (100) nach Anspruch 8, wobei die Steuerschaltung (112) dazu eingerichtet ist, in Reaktion auf das Erfassen eines Endes des schweißtechnischen Vorgangs eine Anzeige einer Differenz zwischen der bestimmten Soll-Schweißzeit (318) und der Dauer des schweißtechnischen Vorgangs (404) auszugeben.

12. Schweißtechnische Stromversorgung (100) nach Anspruch 8, wobei die Steuerschaltung (112) dazu eingerichtet ist, ein Ende des schweißtechnischen Vorgangs in Reaktion auf ein Endsignal zu erfassen.

13. Schweißtechnische Stromversorgung (100) nach Anspruch 8, wobei die Schnittstelle (114; 300) einen Stromversorgungs-Freigabeeingang (320) aufweist, wobei die Steuerschaltung (112) dazu eingerichtet ist, die Leistungsumwandlungsschaltung (110) zu steuern, um eine Abgabe der schweißtechnischen Leistung basierend auf dem Stromversorgungs-Freigabeeingang freizugeben oder zu deaktivieren, oder wobei die Steuerschaltung dazu eingerichtet ist, eine Ausgabevorrichtung (162) zu steuern, um Indikatoren von während des schweißtechnischen Vorgangs ablaufenden Zeitintervallen auszugeben.

14. Schweißtechnische Stromversorgung nach Anspruch 8, wobei die Schnittstelle dazu eingerichtet ist, als die erste Eingabe mindestens eines von einer Materialdicke eines Werkstücks des schweißtechnischen Vorgangs, einem Drahtdurchmesser, einer Drahtvorschubgeschwindigkeit oder einer schweißtechnischen Ausgangsspannung zu empfangen.

15. Schweißtechnische Stromversorgung nach Anspruch 8, wobei die Steuerschaltung dazu eingerichtet ist, mindestens eines von der Dauer des schweißtechnischen Vorgangs (404) oder der verbleibenden Zeitdauer der Soll-Schweißzeit (402) während des schweißtechnischen Vorgangs auszugeben, oder wobei die Steuerschaltung dazu eingerichtet ist, mindestens eines von der Dauer des schweißtechnischen Vorgangs (404) oder der verbleibenden Zeitdauer der Soll-Schweißzeit (402) an einem Ende des schweißtechnischen Vorgangs auszugeben.

## Revendications

1. Système de stimulation de vitesse de déplacement pour des opérations de type soudage, le système comprenant :
une interface (114, 160, 300) configurée pour recevoir une première entrée (304, 306, 308, 310, 312) décrivant une caractéristique d'une opération de type soudage, et configurée pour recevoir une longueur de l'opération (316) de type soudage ;
un circuit de communication (118 ; 714, 716) configuré pour recevoir un signal de démarrage indicatif d'un démarrage d'une opération de type soudage ; et
un circuit de commande (112, 160) configuré pour :
déterminer une vitesse de déplacement cible (314) sur la base de la première entrée ;
déterminer un temps d'opération cible (318) sur la base de la vitesse de déplacement cible et de la longueur de l'opération ;
détecter le démarrage de l'opération de type soudage en réponse au signal de démarrage et démarrer une minuterie ; et
fournir une sortie temporelle représentative d'au moins une durée de l'opération de type soudage (404) ou d'une quantité restante de la durée d'opération cible (402).

2. Système de stimulation de vitesse de déplacement selon la revendication 1, dans lequel le circuit de commande (112, 160) est configuré pour délivrer une notification en réponse à une expiration du temps d'opération cible déterminé (318) avant la détection d'une fin de l'opération de type soudage, et facultativement dans lequel la notification est l'au moins une d'une sortie visuelle, d'une sortie audio ou d'une sortie haptique.

3. Système de stimulation de vitesse de déplacement selon la revendication 1, dans lequel le circuit de commande (112, 160) est configuré pour délivrer une indication d'une différence entre le temps de fonctionnement cible déterminé (318) et la durée de l'opération de type soudage (404).

4. Système de stimulation de vitesse de déplacement selon la revendication 1, dans lequel le circuit de communication (118 ; 714, 716) est configuré pour recevoir un signal de fin, le circuit de commande (112, 160) étant configuré pour détecter une fin de l'opération de type soudage en réponse au signal de fin.

5. Système de stimulation de vitesse de déplacement selon la revendication 1, dans lequel l'interface (114, 160 ; 300) comprend une entrée de validation d'alimentation (320), le circuit de commande (112, 160) configuré pour commander une alimentation de type soudage pour activer ou désactiver la sortie d'une puissance de type soudage par l'alimentation de type soudage pendant l'opération de type soudage sur la base de l'entrée d'activation d'alimentation, ou dans lequel le circuit de commande est configuré pour commander un dispositif de sortie (162) pour délivrer des indicateurs d'intervalles de temps qui expirent pendant l'opération de type soudage.

6. Système de stimulation de vitesse de déplacement selon la revendication 1, dans lequel l'interface (114, 160, 300) est configurée pour recevoir en tant que première entrée (304, 306, 308, 310, 312) au moins l'une d'une épaisseur de matériau d'une pièce à usiner de l'opération de type soudage, d'un diamètre de fil, d'une vitesse d'avance de fil, d'un courant de sortie de type soudage, ou d'une tension de sortie de type soudage, ou dans lequel l'opération de type soudage est une opération de type soudage à l'arc sous tension ou une opération de type soudage simulée.

7. Système de stimulation de vitesse de déplacement selon la revendication 1, dans lequel le circuit de commande (112, 160) est configuré pour délivrer l'au moins une de la durée de l'opération de type soudage (404) ou de la quantité restante du temps d'opération cible (402) pendant l'opération de type soudage, ou dans lequel le circuit de commande est configuré pour délivrer l'au moins une de la durée de l'opération de type soudage (404) ou de la quantité restante du temps d'opération cible (402) à la fin de l'opération de type soudage.

8. Alimentation électrique de type soudage (100), comprenant :
un circuit de conversion de puissance (110) configuré pour convertir une puissance d'entrée en une puissance de type soudage ; et
Système de stimulation de vitesse de déplacement selon la revendication 1.

9. Alimentation électrique de type soudage (100) selon la revendication 8, dans laquelle le circuit de commande (112, 160) est configuré pour émettre une notification en réponse à une expiration du temps de fonctionnement cible déterminé (318) avant de détecter une fin de l'opération de type soudage.

10. Alimentation électrique de type soudage (100) selon la revendication 9, dans laquelle la notification est l'au moins une d'une sortie visuelle ou d'une sortie audio, ou dans laquelle le circuit de communication (118) est configuré pour communiquer avec un dispositif de sortie (162), le circuit de commande est configuré pour sortir la notification via le circuit de communication et le dispositif de sortie, dans laquelle la notification est l'au moins une d'une sortie visuelle, d'une sortie audio ou d'une sortie haptique.

11. Alimentation électrique de type soudage (100) selon la revendication 8, dans laquelle le circuit de commande (112) est configuré pour, en réponse à la détection d'une fin de l'opération de type soudage, délivrer une indication d'une différence entre le temps d'opération cible déterminé (318) et la durée de l'opération de type soudage (404).

12. Alimentation électrique de type soudage (100) selon la revendication 8, dans laquelle le circuit de commande (112) est configuré pour détecter une fin de l'opération de type soudage en réponse à un signal de fin.

13. Alimentation électrique de type soudage (100) selon la revendication 8, dans laquelle l'interface (114 ; 300) comprend une entrée de validation d'alimentation électrique (320), le circuit de commande (112) étant configuré pour commander le circuit de conversion d'alimentation électrique (110) pour valider ou invalider la sortie de l'alimentation électrique de type soudage sur la base de l'entrée de validation d'alimentation électrique, ou dans laquelle le circuit de commande est configuré pour commander un dispositif de sortie (162) pour délivrer des indicateurs d'intervalles de temps expirant pendant l'opération de type soudage.

14. Alimentation de puissance du type à souder selon la revendication 8, dans laquelle l'interface est configurée pour recevoir comme première entrée l'au moins une d'une épaisseur de matériau d'une pièce à usiner de l'opération de type à souder, d'un diamètre de fil, d'une vitesse d'alimentation de fil, ou d'une tension de sortie de type à souder.

15. Alimentation électrique du type à souder selon la revendication 8, dans laquelle le circuit de commande est configuré pour délivrer l'au moins une de la durée de l'opération de type soudage (404) ou de la quantité restante du temps d'opération cible (402) pendant l'opération de type soudage, ou dans lequel le circuit de commande est configuré pour fournir en sortie l'au moins une de la durée de l'opération de type soudage (404) ou de la quantité restante du temps d'opération cible (402) à la fin de l'opération de type soudage.
